# EUROPÄISCHE PATENTSCHRIFT

(11) **EP 0 879 753 B1**
(45) Veröffentlichungstag und Bekanntmachung des Hinweises auf die Patenterteilung: **12.12.2001**
(21) Anmeldenummer: 98109337.0
(22) Anmeldetag: 22.05.1998
(51) Int. Cl.: B62D 11/18, B62D 11/06, F15B 13/04, F15B 13/01

(54) **Fahrzeug mit hydraulischem Einzelradantrieb**
Vehicle with hydraulic individual wheel drive
Véhicule à propulsion hydraulique pour chaque roue indépendamment

(30) Priorität: 23.05.1997 DE 19721623
(43) Veröffentlichungstag der Anmeldung: 25.11.1998
(73) Patentinhaber: Agria-Werke GmbH, D-74219 Möckmühl (DE)
(72) Erfinder: Lüönd, Karl sen., 8842 Unteriberg (CH); Beeler Kurt, 8340 Hinwil-Hadlikon (CH)
(74) Vertreter: Lichti, Heiner, Dipl.-Ing.

(56) Entgegenhaltungen:
- EP-A- 0 141 874
- DE-U- 29 504 612

## Beschreibung

Die Erfindung bezieht sich auf ein Fahrzeug mit den Merkmalen des Oberbegriffs des Anspruchs 1.

Fahrzeuge dieses Aufbaus werden vornehmlich in Form von Einachsfahrzeugen in der Landwirtschaft, im Gartenbau oder im Kommunalbereich zur Bodenbearbeitung, Rasen-, Wegepflege etc. eingesetzt. Sie werden von der Bedienungsperson unmittelbar geführt und gesteuert.

Für eine einfache Handhabung durch den Benutzer sind die Antriebsräder des Einachsfahrzeugs mit hydraulischem Einzelradantrieb ausgestattet, der eine einfache und insbesondere wahlweise unterschiedliche Steuerung der Drehzahl der beiden Antriebsräder gestattet, um eine Kurvenfahrt oder eine Wende problemlos und komfortabel zu ermöglichen.

Eine bekannte Ausführung (EP-0 397 840 B1) sieht zu diesem Zweck ein Poportionalteilerventil vor, das den Gesamtstrom in zwei Teilströme zu den die Räder antreibenden Hydromotoren aufteilt. Durch eine Mengensteuerung der Teilströme können die Antriebsräder mit unterschiedlicher Drehzahl angetrieben werden, um dadurch die Kurvenfahrt zu ermöglichen. Von Nachteil ist hierbei, daß die Hydromotoren parallel geschaltet sind, wodurch sich mit Verringerung des Durchflusses und der Drehzahl an einem Hydromotor Durchfluß und Drehzahl an dem anderen Hydromotor automatisch erhöhen. Ebenso ist der konstruktive und steuerungstechnische Aufwand zur Propotionalteilung des Hydraulikstroms erheblich, woraus eine erhöhte Störanfälligkeit resultiert. Auch sind zur Durchführung einer drehsinngerechten Steuerung bei Vorwärts- und Rückwärtsfahrt weitere konstruktive Maßnahmen notwendig.

Das gattungsgemäße deutsche Gebrauchsmuster 295 04 612.0 offenbart eine serielle Anordnung zweier Hydromotoren mit einer Ventilanordnung zur Steuerung des Hydraulikflusses, die in Abhängigkeit von einer Schwenkbewegung des Lenkholms quer zur Fahrtrichtung unterschiedliche Durchflußmengen an den beiden Hydromotoren bereitstellt. Nachteilig ist hierbei, daß die einzelnen Ventile gesondert mechanisch oder elektronisch über Zusatzventile gesteuert werden müssen, was die Handhabung erschwert und die Anordnung störanfällig macht. Ein weiteres Problem ist auch hier die drehsinngerechte Steuerung bei der Vorwärts- und Rückwärtsfahrt des Einachsfahrzeugs.

Aufgabe der Erfindung ist es, für ein Fahrzeug gemäß dem Oberbegriff des Anspruchs 1 mit seriell geschalteten Hydromotoren eine in der Handhabung einfache, sichere und verlustarme Steuerung mit in Abhängigkeit von der Lenkbewegung am Lenkholm selbsttätig arbeitenden Ventilen zu schaffen, bei der die oben angeführten Probleme beseitigt sind.

Diese Aufgabe wird erfindungsgemäß dadurch gelöst, daß
- die Ventilanordnung eine Drehschieberanordnung mit einem Gehäuse und einem darin gelagerten Drehschieber ist,
- das Gehäuse in zwei verschiedenen Querschnittsebenen jeweils beiderseits des Drehschiebers angeordnete Bohrungen aufweist, die für beide Ebenen mit den Hydromotoren und auf zumindest einer Ebene mit der Verstellpumpe verbunden sind, wobei in der Mittelstellung des Drehschiebers für die Geradeausfahrt die beiden Hydromotoren durch einen in einer Ebene vorgesehenen Durchgang direkt verbunden sind,
- im Drehschieber Kanäle mit Rückschlagventilen angeordnet sind, die beim Verdrehen des Drehschiebers aus der Mittelstellung für die Kurvenfahrt die die Bohrungen in beiden Querschnittsebenen verbinden und dabei einen Bypass zur Reudzierung der Durchflußmenge an dem Hydromotor des Kurveninnenrades bilden, wobei die Durchflußmenge in Abhängigkeit vom Drehwinkel gesteuert wird, während die Durchflußmenge an dem Hydromotor des Kurvenaußenrades konstant bleibt.

Die Erfindung bringt gegenüber bekannten Anordnungen den bedeutsamen Vorteil, daß sämtliche Lenkvorgänge (geradeaus, links, rechts), die durch Schwenkbewegungen am Lenkholm ausgelöst werden, in eine konstruktiv leicht zu beherrschende Drehbewegung am Drehschieber umgesetzt werden und allein durch dessen Drehlage die Hydromotoren entsprechend beaufschlagt werden, ohne daß es irgendwelcher Servoventile oder zusätzlicher Steuerkreise bedarf. Dies gilt sowohl für Vorwärts- als auch für Rückwärtsfahrt, die durch Umschalten der Verstellpumpe bestimmt wird, während die Kurvenfahrt in beiden Fahrtrichtungen nur durch den Drehsinn und die Drehlage des Drehschiebers mit Bezug auf seine neutrale Mittellage bestimmt wird.

Mit Vorteil sind diese Kanäle parallel zu der Achse des Drehschiebers angeordnet und bilden in ihrer aktiven Stellung einen Bypass zwischen den auf unterschiedlichen Querschnittsebenen an einer Seite des Drehschiebers angeordneten Bohrungen in dem Gehäuse, wobei diese Bohrungen jeweils überkreuz an die Hydromotoren angeschlossen sind. Mit diesem Bypass innerhalb des Drehschiebers, der durch einfaches Verdrehen desselben aktiviert werden kann, besteht die Möglichkeit, einen der Hydromotoren zu umgehen, während der zweite mit voller Leistung beaufschlagt wird.

In einer bevorzugten Ausführung ist vorgesehen, daß der Drehschieber vier achsparallele Bypass-Kanäle mit Rückschlagventilen und in jeder der beiden Querschnittsebenen vier vom Umfang ausgehende Bohrungen aufweist, die mit je einem Bypass-Kanal verbunden sind und von denen bei Kurvenfahrt jeweils zwei überkreuz angeordnete Bohrungen die Verbindung zwischen einem Bypass-Kanal und je einer Bohrung im Gehäuse herstellen. Dabei ist die Anordnung vorzugsweise so getroffen, daß je zwei der in einer Querschnittsebene angeordneten, mit je einem Bypass-Kanal verbundenen Bohrungen im Drehschieber fluchten und parallel zu den beiden anderen verlaufen.

Ferner ist vorgesehen, daß die Rückschlagventile in den beiden in einer Drehlage des Drehschiebers gleichzeitig mit den Gehäusebohrungen in Verbindung stehenden Bypass-Kanälen jeweils gleiche Wirkrichtung aufweisen, so daß durch die überkreuz angeordneten Anschlüsse des Hydraulikkreislaufs der Durchfluß durch den Drehschieber bei offenem Rückschlagventil für einen Motor geöffnet und für den anderen Motor durch das zweite geschlossene Rückschlagsventil blockiert wird.

Beim Umschalten von Vorwärts- auf Rückwärtsfahrt oder umgekehrt, also bei Umkehr der Strömungsrichtung im Hydraulikkreislauf, dreht sich die Wirkung der Ventile, die in Anordnung und Wirkrichtung unverändert bleiben, um, und wird ein vorher geöffneter Bypass geschlossen und umgekehrt.

Vorzugsweise liegt die Durchgangsbohrung in derjenigen Querschnittsebene des Drehschiebers, in der auch die vom Umfang des Drehschiebers zu den Bypass-Kanälen mit den Rückschlagventilen führenden Bohrungen liegen. Die Durchgangsbohrung verbindet die beiden Hydromotoren direkt miteinander, und es sind je zwei Bypass-Kanäle mit Rückschlagventilen symmetrisch auf beiden Seiten der Durchgangsbohrung angeordnet.

In einer zusätzlichen vorteilhaften Ausführung ist vorgesehen, daß
- in jeder Querschnittsebene des Drehschiebers zumindest ein Kanal quer zur Achse des Drehschiebers angeordnet ist,
- in jeder Querschnittsebene beiderseits des Drehschiebers jeweils zwei Bohrungen angeordnet sind, die zum Umfang des Drehschiebers reichen und die mit den jeweils auf der anderen Drehschieberseite angeordneten Bohrungen in der gleichen Querschnittsebene weitgehend fluchten und von denen jeweils eine Bohrung mit einem Hydromotor verbunden ist,
- die Bohrungen in beiden Querschnittsebenen durch vertikale Bohrungen im Gehäuse (2) weitgehend parallel zur Drehschieberachse verbunden sind,
- zwei Vertikalbohrungen zur Verstellpumpe weitergeführt sind,
- durch den zumindest einen Kanal in jeder Querschnittsebene des Drehschiebers die jeweils überkreuz angeordneten Bohrungen in einer Querschnittsebene zu beiden Seiten des Drehschiebers in dessen aktiver Position verbunden sind.

Mit den jeweils zwei Bohrungen im Gehäuse in jeder Querschnittsebene an beiden Seiten des Drehschiebers, von denen jeweils eine mit dem entsprechenden Hydromotor und die jeweils zweite über die Vertikalbohrung im Gehäuse mit der benachbarten Ebene verbunden ist, besteht die Möglichkeit, über den in der Querschnittsebene im Drehschieber angeordneten Kanal die entsprechenden Bohrungen einer Querschnittsebene im Gehäuse so zu verbinden, daß einer der Hydromotoren mittels eines Bypasses umgangen werden kann.

Bevorzugt ist der Durchgang in dem Drehschieber zur direkten Verbindung der Hydromotoren über zwei in einer Querschnittsebene des Gehäuses fluchtende Bohrungen als kreissegmentförmige Aussparung am Drehschieber ausgebildet.

In der Mittelstellung des Drehschiebers werden dabei die zu den Hydromotoren führenden, fluchtenden Bohrungen einer Querschnittsebene verbunden und beide Hydromotoren zur Geradeausfahrt mit der gleichen Füllung beaufschlagt.

Weiter mit Vorteil wirkt die kreissegmentförmige Aussparung bei Rückwärtsfahrt mit zwei etwa parallelen Querkanälen im Drehschieber mit entgegengesetzt wirkenden Rückschlagventilen zusammen, wobei im Zusammenwirken der Aussparung und jeweils eines Querkanals die Möglichkeit eines Bypasses begründet ist, ohne daß dazu zusätzliche Bohrungen notwendig sind.

In einer weiteren vorteilhaften Ausführung kann die Durchflußmenge für jeweils einen der beiden Hydromotoren über den Bypass auf Werte zwischen einem Maximum und Null variiert werden, während der zweite Hydromotor unabhängig davon konstant mit der maximalen Durchflußmenge versorgt wird.

Weiterhin bevorzugt ist eine direkte mechanische Wirkverbindung zwischen dem Lenkholm und dem Drehschieber.

Zur Erhöhung der Betriebssicherheit können in einer weiteren vorteilhaften Ausführung der Erfindung in dem Drehschieber integrierte Senkbremsen vorgesehen sein.

Nachstehend ist die Erfindung anhand eines Ausführungsbeispiels und mehrerer Funktionsschemata beschrieben. In der Zeichnung zeigen:
- Fig. 1: ein Schaltschema des Hydraulikkreislaufs zum Antrieb eines Fahrzeugs mit hydraulischem Einzelradantrieb;
- Fig. 2: einen schematischen Längsschnitt der Drehschieberanordnung mit einem Schaltschema in der Position Geradeausfahrt (vorwärts);
- Fig. 3: einen detaillierten Längsschnitt der Drehschieberanordnung bei Geradeausfahrt;
- Fig. 4: einen Querschnitt IV-IV gemäß Fig. 3 (Radialebene A);
- Fig. 5: einen Querschnitt V-V gemäß Fig. 3; (Radialebene B);
- Fig. 6: eine der Fig. 2 entsprechende Darstellung bei Vorwärts-Kurvenfahrt im Uhrzeigersinn (Rechtskurve);
- Fig. 7: einen Längsschnitt der Drehschieberanordnung ähnlich Fig. 3 bei Kurvenfahrt im Uhrzeigersinn (Rechtskurve);
- Fig. 8: einen Schnitt VIII-VIII gemäß Fig. 7 (Radialebene A);
- Fig. 9: einen Schnitt IX-IX gemäß Fig. 7 (Radialebene B);
- Fig. 10: einen der Fig. 9 entsprechenden Schnitt (Radialebene B) in einer Zwischenstellung bei Kurvenfahrt im Uhrzeigersinn (Rechtskurve);
- Fig. 11: einen der Fig. 8 entsprechenden Schnitt (Radialebene A) bei Kurvenfahrt im Gegenuhrzeigersinn (Linkskurve);
- Fig. 12: einen der Fig. 9 entsprechenden Schnitt (Radialebene B) bei Kurvenfahrt im Gegenuhrzeigersinn (Linkskurve);
- Fig. 13: ein der Fig. 2 entsprechendes Schaltschema bei Kurvenfahrt im Gegenuhrzeigersinn (Linkskurve);
- Fig. 14: eine Drehschieberanordnung einer zweiten Ausführungsform im Längsschnitt;
- Fig. 15.: einen Querschnitt XV-XV gemäß Fig. 14;
- Fig. 16: einen Querschnitt XVI-XVI gemäß Fig. 14;
- Fig. 17: eine schematische Darstellung beider Wirkebenen des Drehschiebers sowie deren Zusammenwirken mit den Hydromotoren bei Geradeausfahrt gemäß der zweiten Ausführungsform;
- Fig. 18: eine der Fig. 17 entsprechende Darstellung bei einer Vorwärtskurvenfahrt und
- Fig. 19: eine der Fig. 17 entsprechende Darstellung bei einer Rückwärtskurvenfahrt.

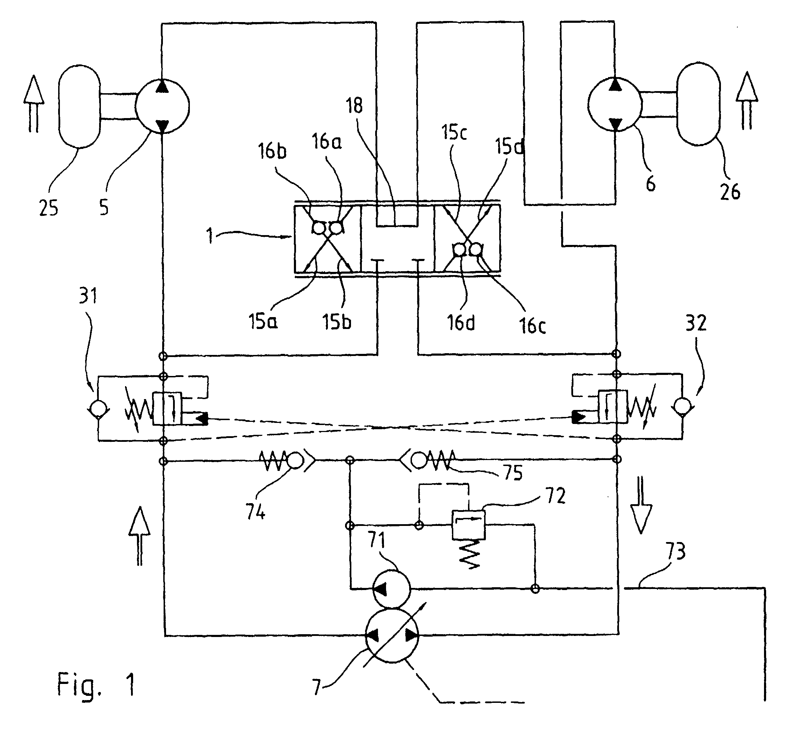

Von dem in der Zeichnung nicht näher dargestellten Fahrzeug bekannter Bauart sind in Fig. 1 nur die Antriebsräder, nämlich das linke Rad 25 und das rechte Rad 26 gezeigt, die jeweils durch einen eigenen Hydromotor 5 bzw. 6 angetrieben sind. Die Hydromotoren 5, 6 liegen in einem als Blockschaltbild wiedergegebenen Hydraulikkreislauf mit einer Verstellpumpe 7, z.B. in Axialkolbenbauweise, die von dem nicht gezeigten Fahrzeugmotor, z.B. einem Verbrennungsmotor, einem E-Motor od. dgl., angetrieben wird. In dem Hydraulikkreislauf ist zur Steuerung der Hydromotoren 5, 6 eine Drehschieberanordnung 1 vorgesehen, die im einzelnen weiter unten beschrieben ist. Hier sei nur soviel erwähnt: In der in Fig. 1 gezeigten Schaltposition für die Geradeausfahrt vorwärts fördert die Verstellpumpe 7 die Hydraulikflüssigkeit unmittelbar über den Hyromotor 5 und durch eine Durchgangsbohrung 18 in der Drehschieberanordnung 1 zu dem Hydromotor 6. Beide Hydromotoren 5, 6 laufen mit voller Füllung und beide Antriebsräder 25, 26 laufen mit gleicher Drehzahl. Die Drehschieberanordnung weist ferner Bypass-Kanäle 15a bis 15d mit je einem Rückschlagventil 16a bis 16d auf, die nur für die Steuerung der Kurvenfahrt vorgesehen und bei der gezeigten Geradeausfahrt nicht beaufschlagt sind. Die Rückschlagventile arbeiten paarweise in entgegengesetzter Richtung, wie sich aus der weiteren Beschreibung ergibt. Für die Geradeausfahrt rückwärts wird die Verstellpumpe umgeschaltet und kehrt sich dann nur der Richtungssinn seiner der in Fig. 1 gezeigten Pfeile um.

Die Drehschieberanordnung 1 weist je eine konstruktiv in den Zulauf bzw. Ablauf integrierte Senkbremse 31, 32 auf, die über Steuerleitungen wechselweise in Verbindung stehen. Der Verstellpumpe 7 ist eine Füllpumpe 71 und dieser ein Einstellventil 72 für den Füllpumpendruck zugeordnet. Die Füllpumpe 71 saugt das Hydrauliköl aus einem nicht gezeigten Tank und Filter über die Leitung 73 an. Ihr sind die Rückschlagventile 74, 75 zur Beaufschlagung der Saug- und Druckseite der Verstellpumpe mit dem Füllpumpendruck nachgeschaltet.

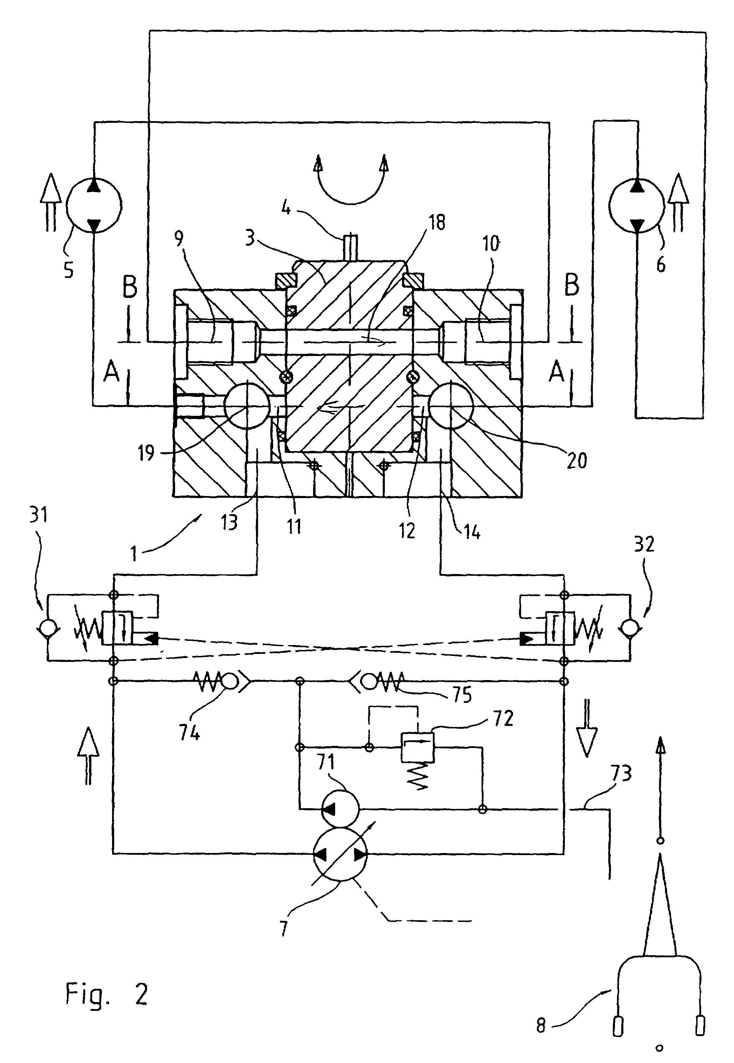

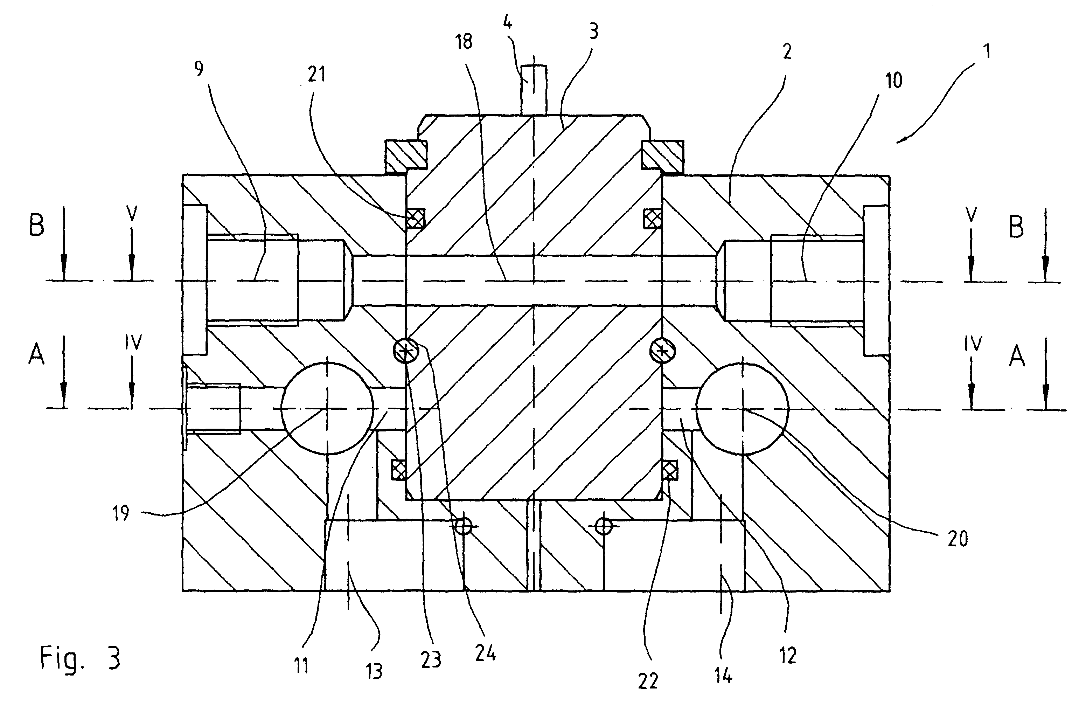

Figuren 2 und 3 zeigen schematisch die Drehschieberanordnung 1 mit einem Gehäuse 2 und einem darin gelagerten Drehschieber 3. Das Gehäuse weist auf zwei verschiedenen Querschnittsebenen A, B Bohrungen 9, 10 bzw. 19, 20 auf, an die die Hydromotoren 5 und 6 für das linke und rechte Rad überkreuz angeschlossen sind. An die Bohrungen 19, 20 in Ebene A ist die Verstellpumpe 7 angeschlossen.

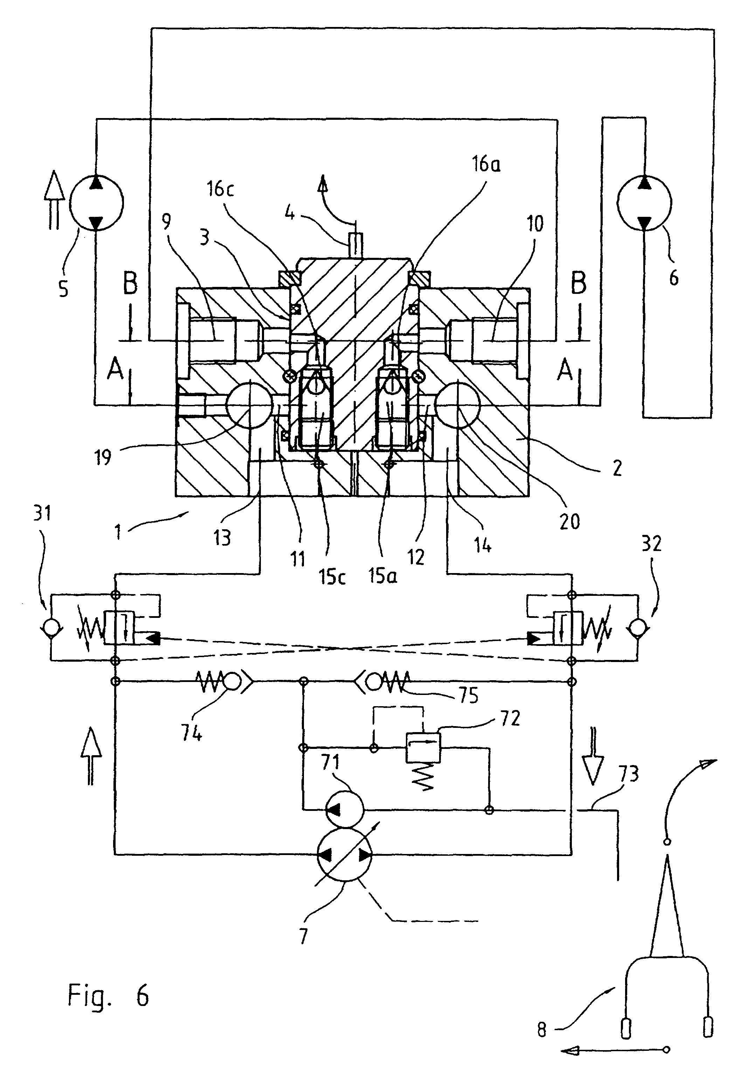

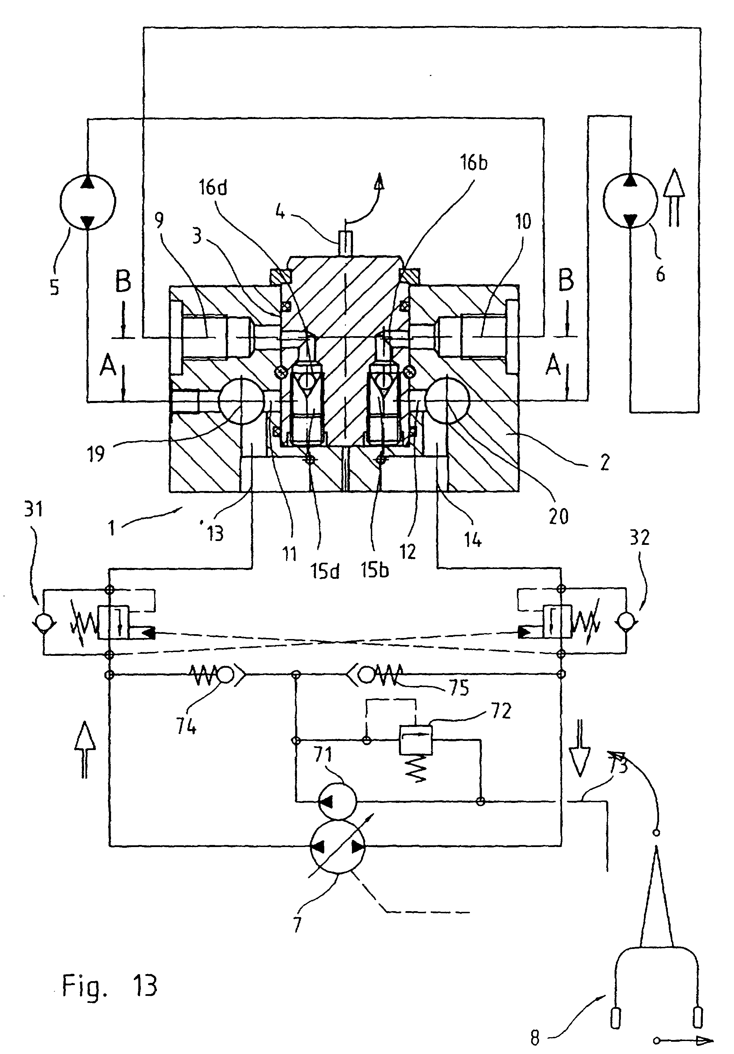

An einem Stellglied 4 des Drehschiebers 3 greift der vom Fahrer betätigte Lenkholm 8 an. Der Lenkholm 8 ist in dem in Fig. 2, wie auch in Fig. 6 und 13 "eingeblendeten" Bild erkennbar, in welchem auch die Fahrtrichtung mit Richtungspfeil angedeutet ist.

Die Drehschieberanordnung 1 ist so aufgebaut, daß die Hydromotoren 5 und 6 seriell geschaltet sind. Das Gehäuse 2 weist zu diesem Zweck auf der Ebene B die fluchtenden Bohrungen 9, 10 auf, an die jeweils einer der beiden Hydromotoren ablauf- bzw. zulaufseitig -je nach Fahrtrichtung- angeschlossen ist. Das Gehäuse 2 weist zwei auf dieser Ebene ansetzende, zum Drehschieber 3 führende Bohrungen 11, 12 auf, die jeweils mit einer orthogonal dazu verlaufenden, in Fig. 2 der besseren Übersicht wegen jedoch in der gleichen Ebene gezeigten Bohrung 13, 14 in Verbindung stehen, die ihrerseits die Verbindung zur Verstellpumpe 7 herstellen.

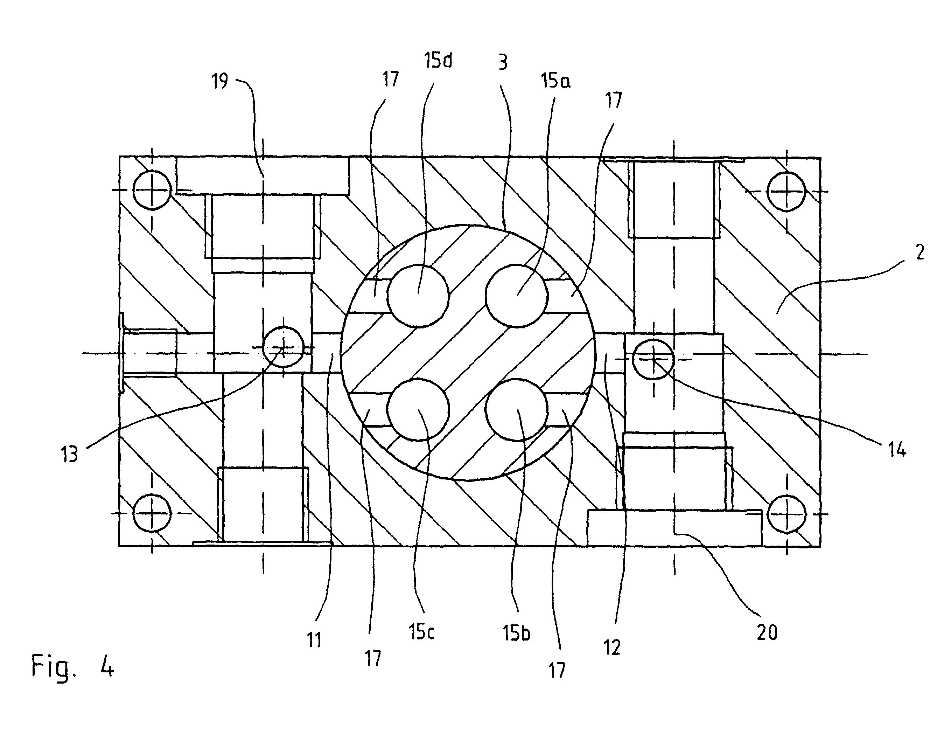

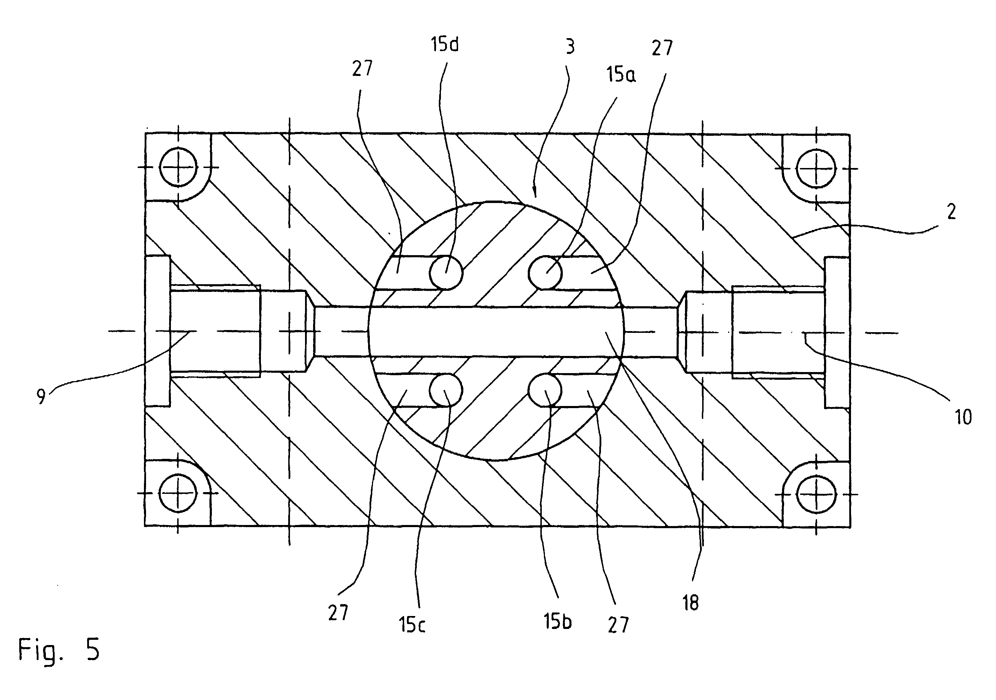

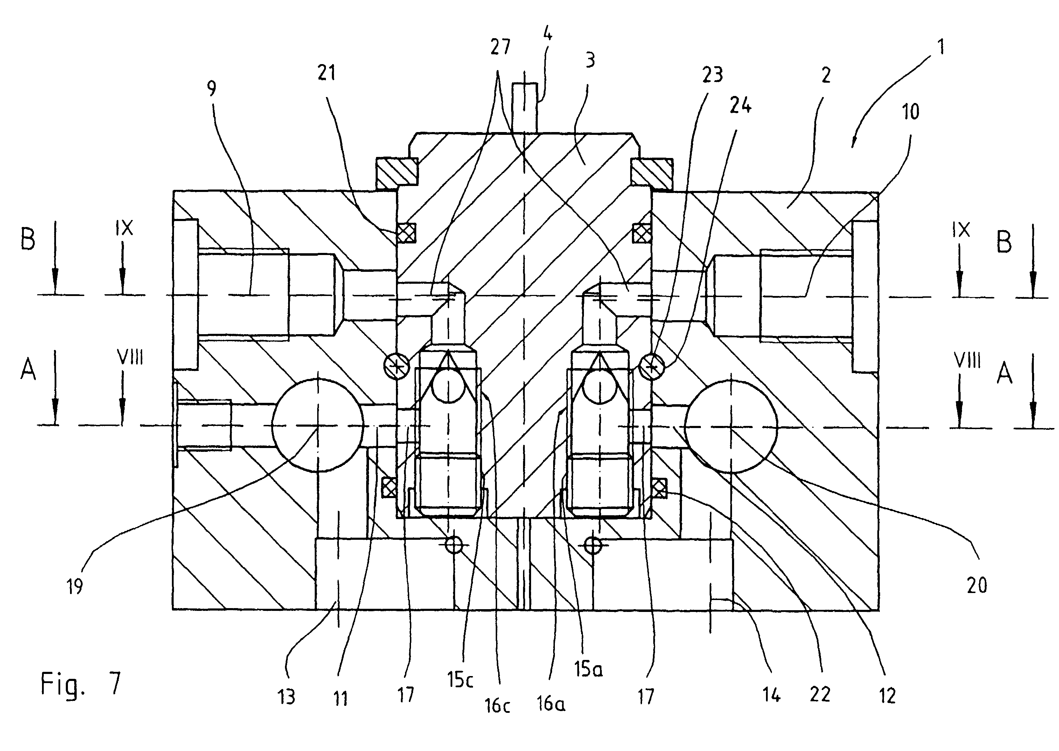

Wie Fig. 4 und 5 zeigen, weist der Drehschieber 3 vier zu seiner Drehachse parallele, symmetrisch angeordnete Bypass- Kanäle 15 auf, die je ein Rückschlagventil 16 (Fig. 1 und 7) aufnehmen. Ferner weist er je vier Bohrungen 17 in der Querschnittsebene A und Bohrungen 27 in der Querschnittsebene B auf, die bei entsprechender Stellung des Drehschiebers 3 die Bypass-Kanäle 15 mit den Radialbohrungen des Gehäuses 2 auf den Querschnittsebenen A bzw. B verbinden. Auf beiden Querschnittsebenen A, B fluchten je zwei der Bohrungen 17, 27 des Drehschiebers und verlaufen parallel zu den beiden anderen. Auf der Querschnittsebene B weist der Drehschieber 3 ferner die zentrale Durchgangsbohrung 18 auf, die in der Mittelstellung des Drehschiebers 3 bei Geradeausfahrt die Radialbohrungen 9, 10 im Gehäuse 2 direkt verbindet (Figur 1, 2, 3, 5).

Die Figuren 1 bis 5 zeigen den Drehschieber 3 in seiner Mittelstellung bei Geradeausfahrt vorwärts, in der das Hydrauliköl über die Bohrungen 13 und 19 direkt dem Hydromotor 5, der das linke Rad antreibt, zufließt und dann über die Bohrung 10 im Gehäuse 2, die Durchgangsbohrung 18 im Drehschieber und die Bohrung 9 im Gehäuse dem zweiten, seriell geschalteten Hydromotor 6 zuläuft, um dann über die Bohrungen 20 und 14 zurück zur Verstellpumpe 7 zu gelangen. Die in dem Drehschieber angeordneten Bypass-Kanäle 15 mit den Rückschlagventilen 16 sind bei Geradeausfahrt nicht beaufschlagt, wie mit Bezug auf Fig. 1 bereits angedeutet und im übrigen aus Fig. 4 und 5 ersichtlich. Ob das Fahrzeug vorwärts oder rückwärts fährt, hängt nur von der Förderrichtung der Verstellpumpe ab, die vom Fahrer geschaltet wird. Bei Rückwärtsfahrt nimmt die Hydraulikflüssigkeit den umgekehrten Weg, läuft also über die Bohrung 14 dem Drehschieber zu und über die Bohrung 13 ab.

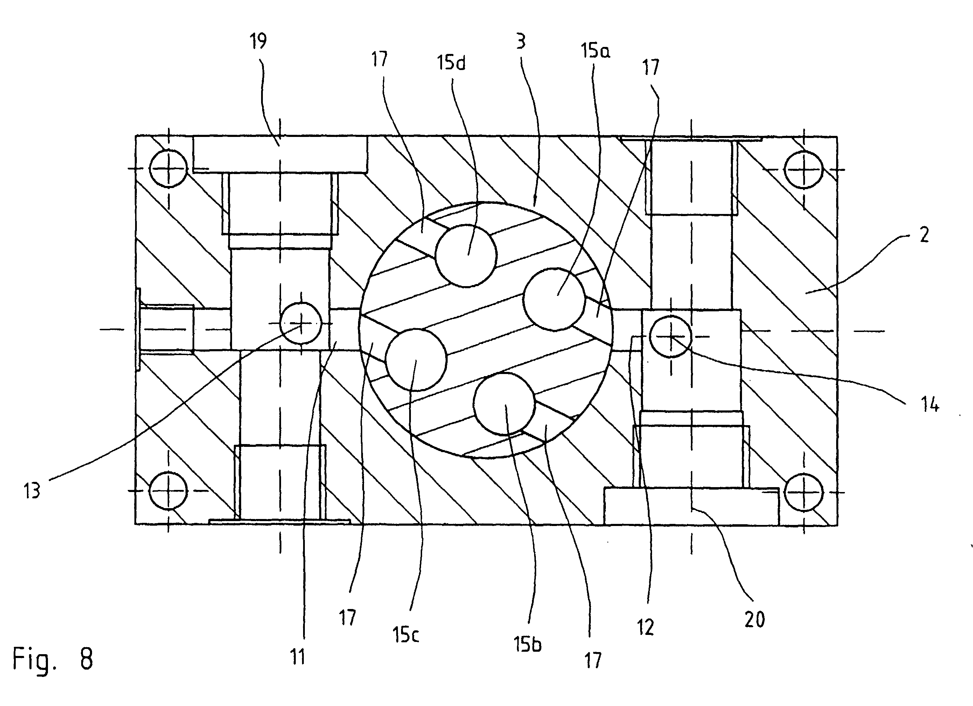

Die Figuren 6 bis 9 zeigen die Funktionsweise bei einer Kurvenfahrt im Uhrzeigersinn (Rechtskurve bei Geradeausfahrt). Durch Schwenken des Lenkholms 8 nach links wird der Drehschieber 3 aus seiner Mittelstellung im Uhrzeigersinn gedreht (Fig. 8, 9 und 10). Die Steuerkanäle 15a und 15c mit den Ventilen 16a und 16c (Fig. 7) stehen über ihre jeweiligen Bohrungen 17, 27 mit den Radialbohrungen 9, 10, 19, 20 im Gehäuse 2 in Verbindung, an die wiederum die Hydromotoren angeschlossen sind. Die jeweils überkreuz angeordneten, nur bei der Kurvenfahrt (im Uhrzeigersinn) wirksam werdenden Rückschlagventile 16a und 16c weisen dabei die gleiche Wirkrichtung auf.

Bei Vorwärtsfahrt gelangt die Hydraulikflüssigkeit durch die Bohrung 13 in die Drehschieberanordnung 1 (Fig. 6). Der Hydromotor 5 wird somit mit voller Füllung durchflossen. Der Zufluß zu dem Hydromotor 6 über den Bypass-Kanal 15c ist durch die Wirkrichtung des Ventils 16c gesperrt. Die am Hydromotor 5 ablaufende Hydraulikflüssigkeit strömt über die Radialbohrung 10 des Gehäuses 2 auf der Ebene B in die Drehschieberanordnung 1. Das Ventil 16a ist in Förderrichtung des Flüssigkeitsstroms geöffnet und bildet für den Hydromotor 6 einen Bypass, der die Flüssigkeit vom Zulauf über die Bohrung 10 direkt über die Bohrung 12 und 14 zur Verstellpumpe 7 zurückführt. Da in dieser Extremstellung die Füllmenge des Hydromotors 6 auf Null reduziert ist, steht das rechte Rad still und das Fahrzeug vollzieht eine Kurve mit engstem Kurvenradius im Uhrzeigersinn. Bei der Rückwärtsfahrt wird die Hydraulikflüssigkeit von der Verstellpumpe in umgekehrter Richtung gefördert und über die Bohrung 14 in die Drehschieberanordnung geführt. Die Stellung des Drehschiebers 3 und somit auch der Ventile 16 bleibt für eine Kurvenfahrt im Uhrzeigersinn unverändert. Dementsprechend wird bei umgekehrter Fließrichtung des Hydrauliköls der Hydromotor 6 über die Bohrung 20 mit der gesamten Füllmenge beaufschlagt, während der Bypass-Kanal 15c mit dem Ventil 16c einen Bypass für den Hydromotor 5 bildet, der die Flüssigkeit vom Zulauf über die Bohrung 9 direkt über die Bohrungen 11 und 13 zur Verstellpumpe 7 zurückführt. Während das linke Rad somit stillsteht, vollzieht sich die rückwärtsgerichtete Kurvenfahrt im Uhrzeigersinn durch den ungeminderten Antrieb des rechten Rades.

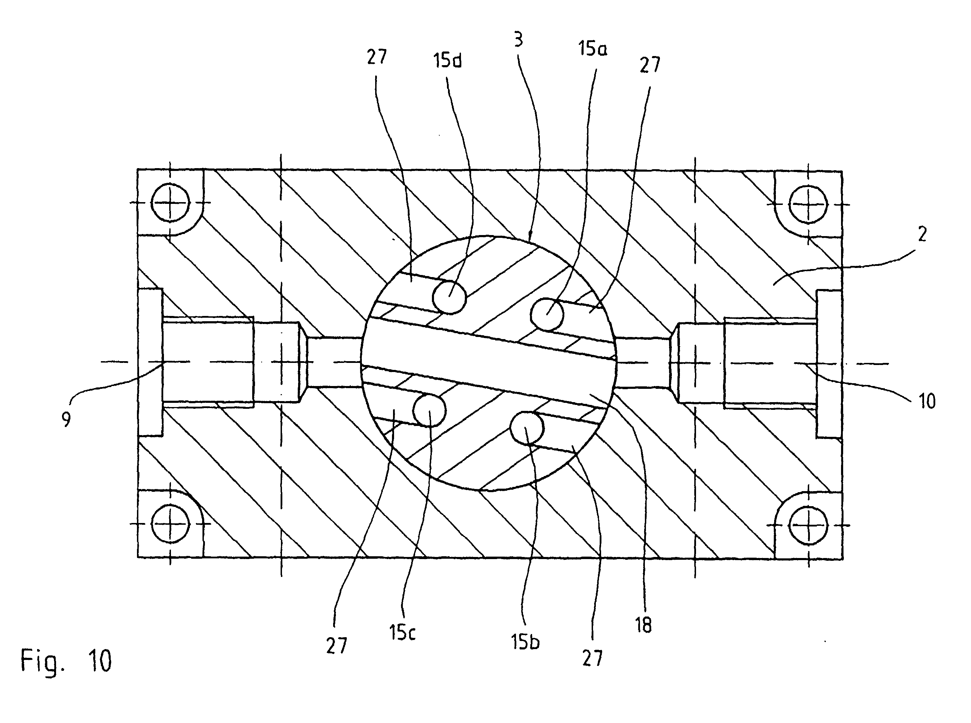

Wie Figur 10 anhand einer Zwischenlage des Drehschiebers 3 zeigt, erfolgt die Reduzierung der Füllung eines der beiden Hydromotoren in Abhängigkeit vom Drehwinkel stufenlos, indem der Drehschieber 3 mittels des Lenkholms so verstellt wird, daß sowohl die Bohrung 18 zur direkten Verbindung als auch die entsprechenden Bohrungen 27 für den Bypass die Radialbohrungen 9, 10 im Gehäuse 2 teilweise überdecken. Somit fließt ein Teilstrom in den Hydromotor und ein zweiter Teilstrom über den Bypass direkt zurück zur Verstellpumpe 7. Je weiter der Drehschieber 3 aus seiner Mittelstellung verdreht wird, umso weniger überdeckt die Bohrung 18 die Radialbohrungen im Gehäuse und umso geringer ist die Füllung des entsprechenden Hydromotors. Entsprechend nimmt die Durchflußmenge über den Bypass zu.

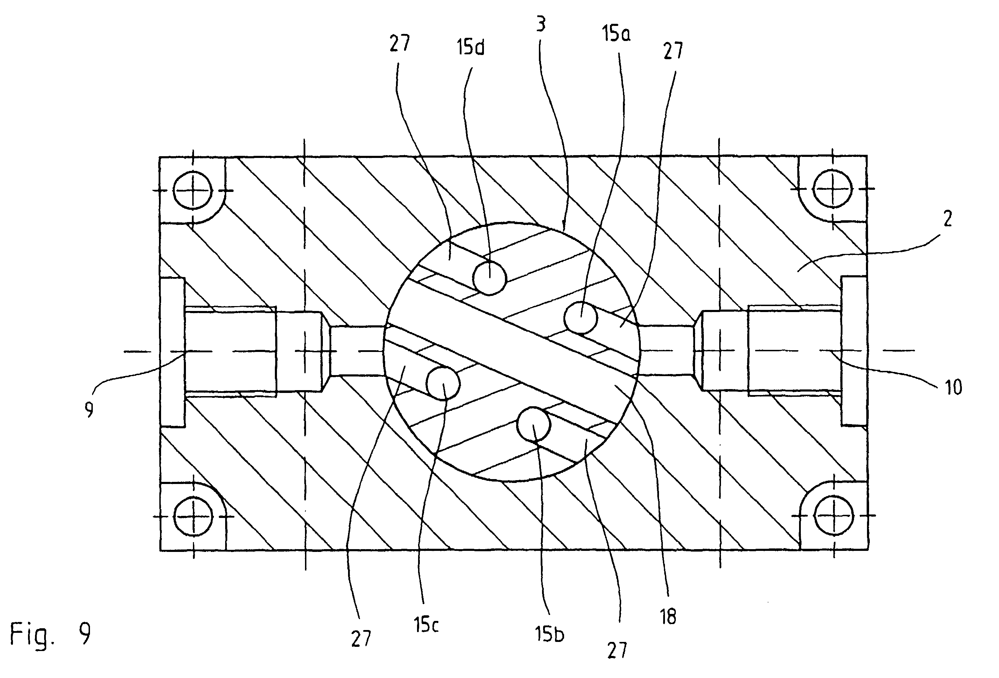

In der Extremstellung des Lenkholms und folglich des Drehschiebers besteht keine Verbindung mehr zwischen den Radialbohrungen 9, 10 im Gehäuse 2 über die Durchgangsbohrung 18 (Fig. 9). Die Füllung des zweiten Hydromotors wird Null und das entsprechende Rad kommt zum Stillstand. Die Fig. 6 bis 9 und 11, 12 zeigen diese Extremstellung.

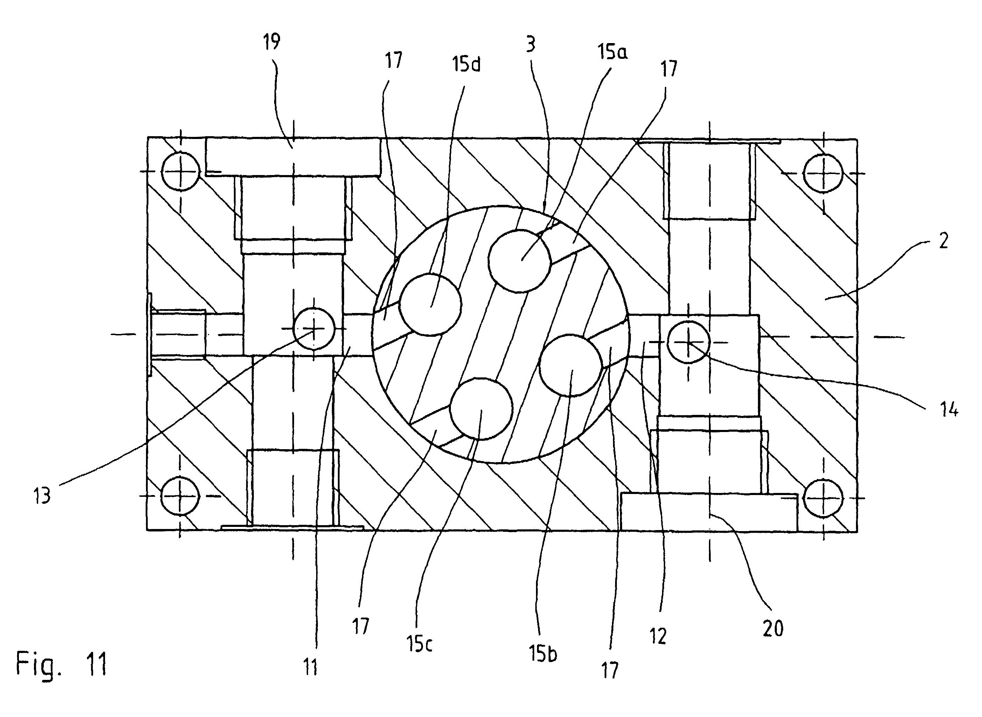

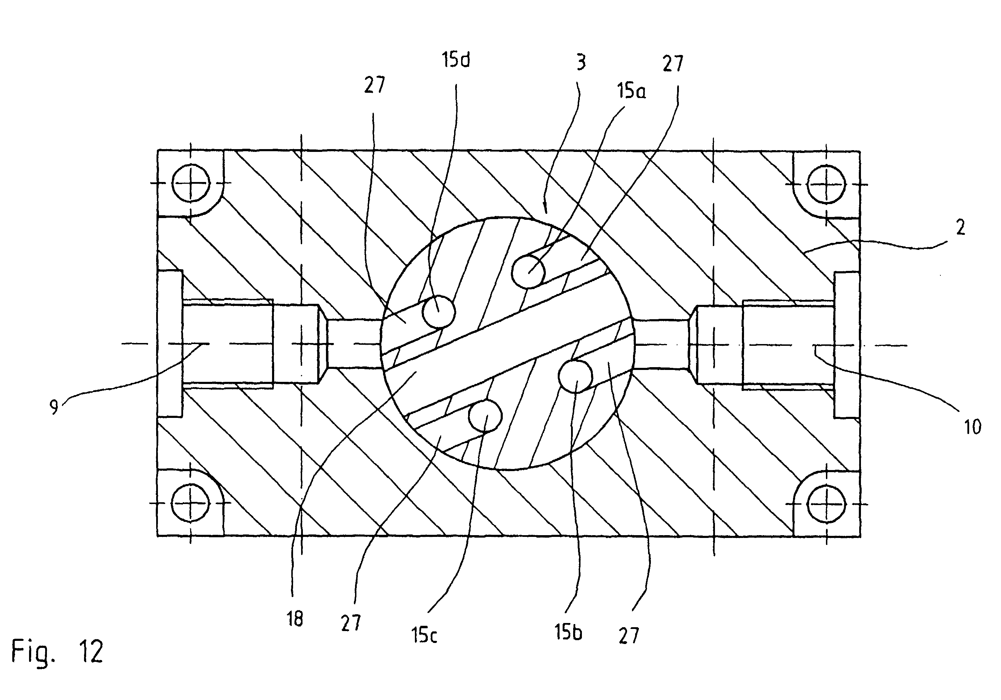

Bei einer Kurvenfahrt im Gegenuhrzeigersinn (Fig. 11 bis 13) ist die Wirkung der Drehschieberanordnung 1 analog zur Wirkung bei der Kurvenfahrt im Uhrzeigersinn. Durch Verschwenken des Lenkholms 8 wird jedoch der Drehschieber 3 im Gegenuhrzeigersinn gedreht, wodurch die Bypass-Kanäle 15b, 15d mit den Rückschlagventilen 16b und 16d mit den Radialbohrungen im Gehäuse 2 in Verbindung treten (Fig. 11, 12). Die Wirkrichtung der Ventile 16b und 16d ist entgegengesetzt der Wirkrichtung der Ventile 16a und 16c (Fig. 13). Dementsprechend wird bei der Kurvenfahrt im Gegenuhrzeigersinn die Füllung bei Vorwärtsfahrt im Hydromotor 5 und bei Rückfahrtsfahrt im Hydromotor 6 reduziert. Aufgrund des symmetrischen Aufbaus der Drehschieberanordnung erfolgt die Reduzierung der Füllung des Hydromotors des abzubremsenden Rades bei der Kurvenfahrt im Gegenuhrzeigersinn analog zur Kurvenfahrt im Uhrzeigersinn ausschließlich in Abhängigkeit vom Drehwinkel des Drehschiebers.

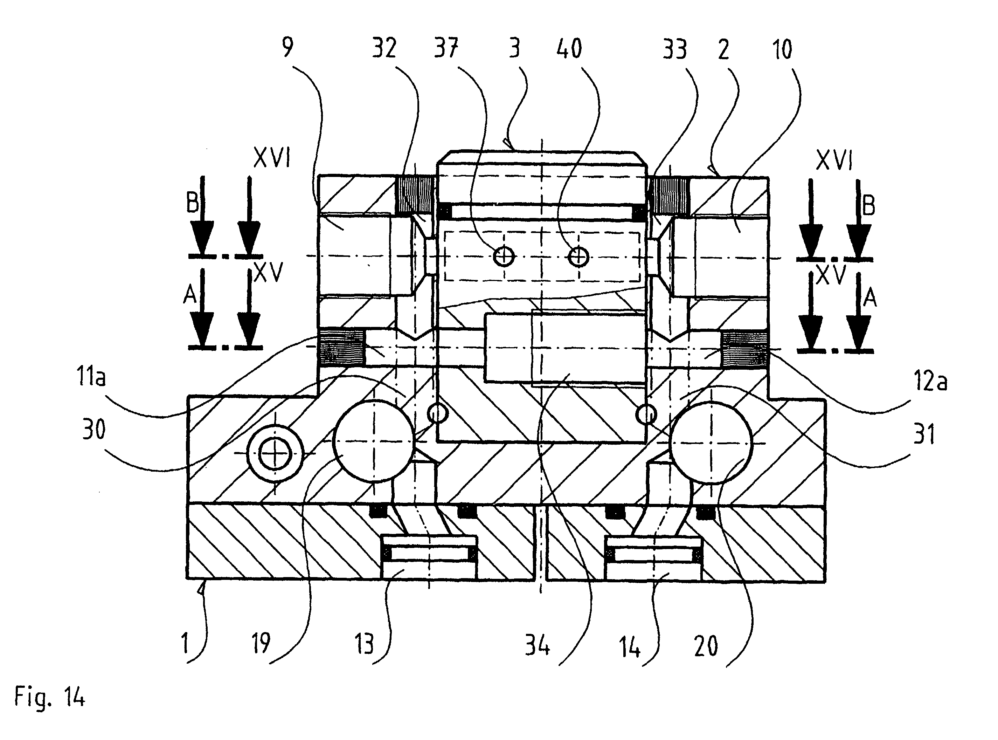

Die in Fig. 14 dargestellte zweite Ausführungsform der Erfindung zeigt eine Drehschieberanordnung 1 weitgehend analog der in Fig. 2 dargestellten ersten Ausführungsform. Einander entsprechende Bauteile beider Ausführungsformen sind mit gleichen Bezugszeichen versehen.

In der in Fig. 14 gezeigten Ausführungsform wurde auf eine Darstellung der Verstellpumpe sowie deren Steuerung wie auch auf die Darstellung der Hydromotoren verzichtet.

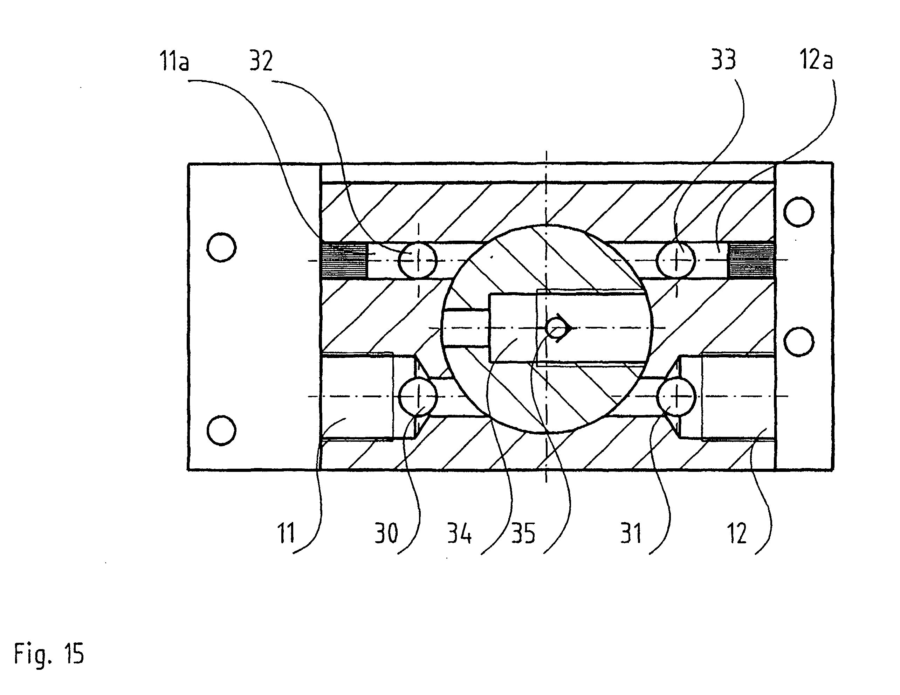

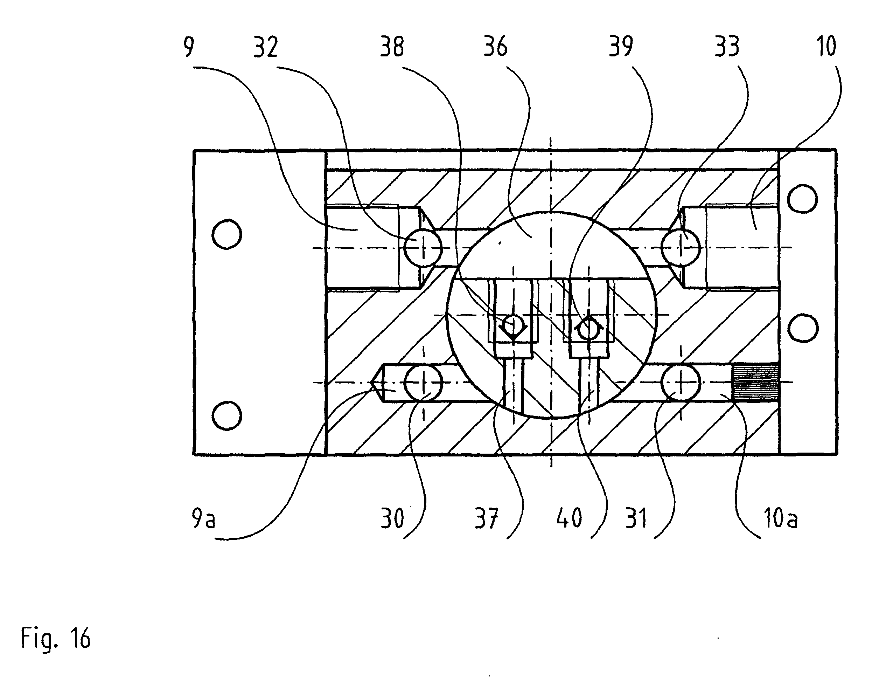

Die Drehschieberanordnung gemäß dieser Ausführungsform weist ein Gehäuse 2 und einen in diesem gelagerten Drehschieber 3 auf. Die Anordnung zeigt zwei Querschnittsebenen A und B mit in diesen Querschnittsebenen vorgesehenen Bohrungen in dem Gehäuse, die bis zur Umrandung des Drehschiebers 3 reichen. In jeder Querschnittsebene A und B sind auf jeder Seite des Drehschiebers 3 jeweils zwei parallele Bohrungen 9, 9a, 10, 10a, 11, 11a, 12, 12a vorgesehen (Fig. 15, 16). Die jeweils zwei übereinander angeordneten Bohrungen in den beiden Querschnittsebenen A und B sind über vier parallel zur Drehachse des Drehschiebers 3 angeordnete Vertikalbohrungen 30, 31, 32, 33 miteinander verbunden.

Von den jeweils vier Querbohrungen in jeder Querschnittsebene A und B sind jeweils zwei 9, 10 und 11, 12 zum Abschluß des Gehäuses 2 offen und bilden auf ihrer jeweiligen Querschnittsebene die Zu- und Ableitungen zu den Hydromotoren, wobei die entsprechenden Bohrungen 9, 10 und 11, 12 jeder Querschnittsebene fluchten. Die weiteren vier Bohrungen 9a, 10a und 11a, 12a reichen vom Umfang des Drehschiebers 3 nicht bis zu dem Abschluß des Gehäuses 2. Sie bilden gemeinsam mit den Vertikalbohrungen 30 bis 33 von dem Strömungsweg über die Hydromotoren unabhängige Hydraulikverbindungen zwischen den beiden Querschnittsebenen A und B. Wie aus den Fig. 15 und 16 ersichtlich, sind die Querbohrungen in jeder Querschnittsebene so angeordnet, daß durch die achsparallelen Vertikalbohrungen jeweils eine bis zum Abschluß des Gehäuses 2 reichende Bohrung einer Querschnittsebene mit einer nicht bis zum Rand reichenden Querbohrung der anderen Querschnittsebene verbunden ist. Beispielsweise verbindet die Vertikalbohrung 31 die Bohrung 10a in der Querschnittsebene B mit der bis zum Gehäuseabschluß reichenden Bohrung 12 in der Querschnittsebene A.

Die Vertikalbohrungen 30 und 31 sind bis zu den Verbindungen 19 und 20 zu der nicht dargestellten Verstellpumpe weitergeführt, während die Vertikalbohrungen 32 und 33 nur eine Verbindung zwischen den Querschnittsebenen A und B herstellen.

Fig. 15 zeigt weiter die Ausbildung des Drehschiebers 3 in der Querschnittsebene A. Der Drehschieber 3 weist in dieser Ebene einen mittigen Durchgangskanal 34 mit einem Rückschlagventil 35 auf. Der Kanal 34 ist so angeordnet, daß er bei Verdrehen des Drehschiebers einander diagonal gegenüberliegende Bohrungen 11a und 12 oder 11 und 12a verbindet. In Fig. 15 befindet sich der Drehschieber 3 in einer für die Querschnittsebene A passiven Stellung.

Fig. 16 zeigt die Ausbildung des Drehschiebers 3 in der Querschnittsebene B. Der Drehschieber 3 weist in dieser Ebene eine kreissegmentförmige Aussparung 36 sowie zwei in etwa parallele Bohrungen 37 und 40 mit Rückschlagventilen 38 und 39 auf, die sich vom Umfang des Drehschiebers 3 bis zu der kreissegmentförmigen Aussparung 36 erstrecken. In Fig. 16 sind die beiden in der Querschnittsebene B zu den Hydromotoren führenden fluchtenden Bohrungen 9 und 10 über die Aussparung 36 verbunden.

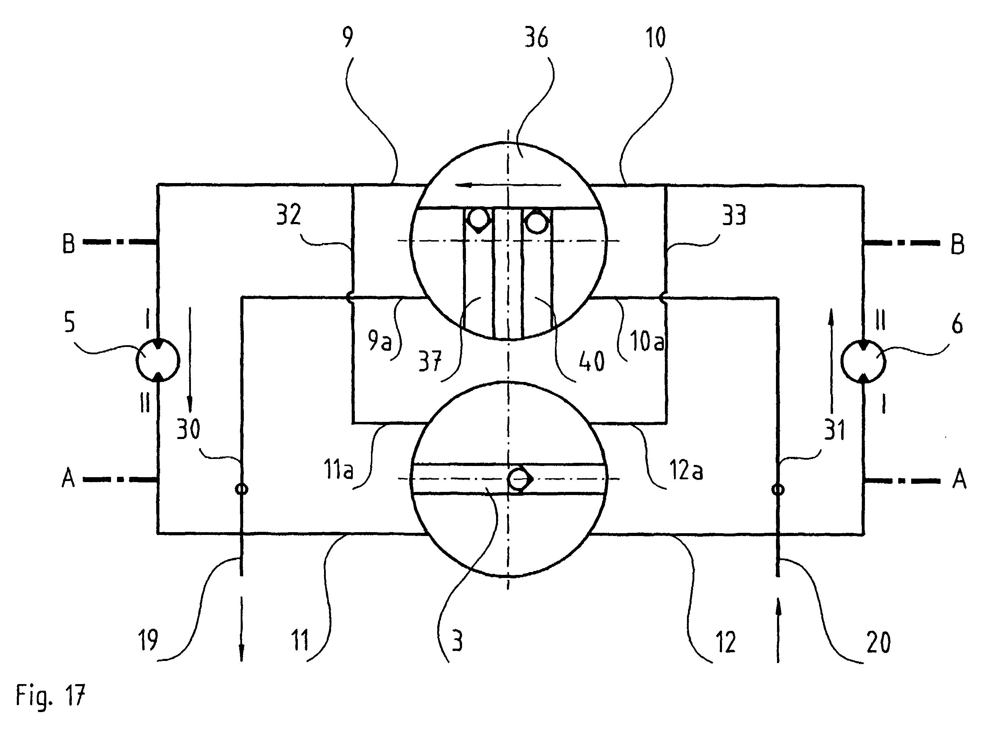

Die schematischen Darstellungen in den Fig. 17, 18 und 19 zeigen den Fluß der Hydraulikflüssigkeit durch die Hydromotoren 5, 6 sowie die Drehschieberanordnung, wobei die Bohrungen lediglich als schematische Verbindungen ihrer Zu- und Ableitungen zu den im Querschnitt dargestellten Ebenen A und B des Drehschiebers gezeigt sind.

Fig. 17 zeigt die Geradeausfahrt des Fahrzeugs in Vorwärtsrichtung, wobei die Hydraulikflüssigkeit von der nicht dargestellten Verstellpumpe über die Bohrung 20 in die Drehschieberanordnung eintritt und dem Hydromotor 6 zuläuft. Der Durchfluß des Hydromotors von I nach II signalisiert die Vorwärtsbewegung des Motors. Vom Hydromotor 6 läuft die Hydraulikflüssigkeit über die Aussparung 36 im Drehschieber 3 auf der Querschnittsebene B dem Hydromotor 5 zu, der ebenfalls von I nach II, also in Vorwärtsrichtung durchströmt wird. Nach dem Hydromotor 5 strömt die Hydraulikflüssigkeit über die Bohrung 19 zurück zu der nicht dargestellten Verstellpumpe.

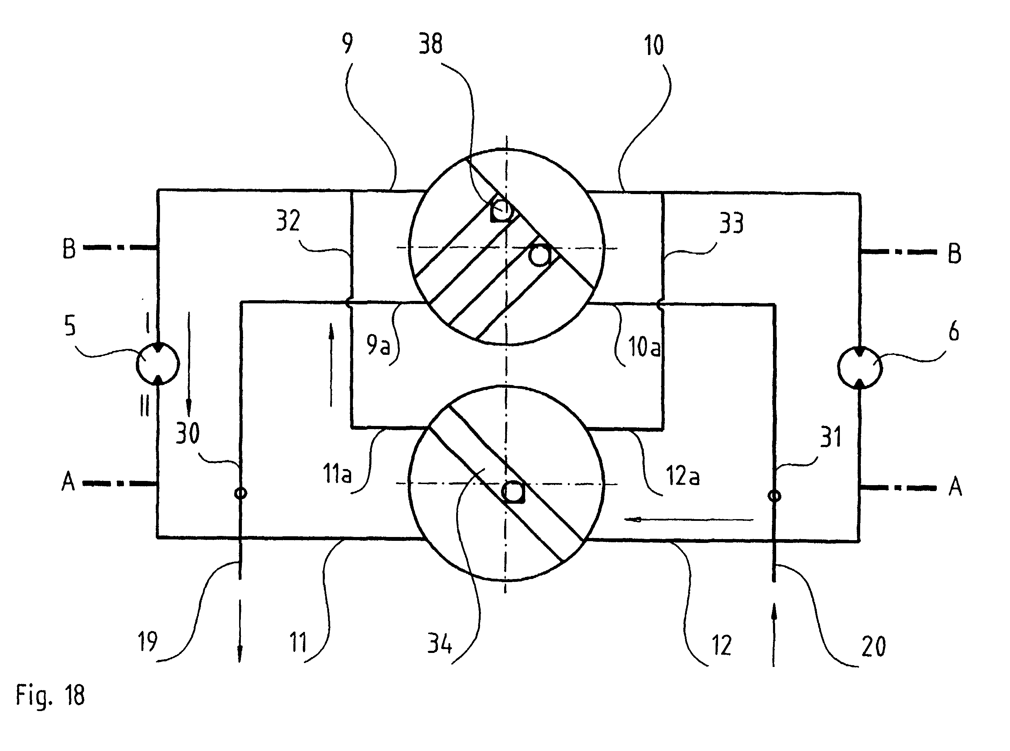

Bei der in Fig. 18 gezeigten Betriebsstellung des Drehschiebers 3 ist der Durchfluß von der Bohrung 20 durch den Hydromotor 6 wegen des Rückschlagventils 38 in der Querschnittsebene B blockiert und der Hydromotor 6 wird über die Bohrung 12 in der Querschnittsebene A und die Bohrung 34 des Drehschiebers 3 umgangen. Über due Querbohrung 11a und die Vertikalbohrung 32 wird die Hydraulikflüssigkeit zu der Bohrung 9 in der Querschnittsebene B und von dort durch den Hydromotor 5 und anschließend über die Bohrung 19 zurückgeführt. Der einseitig beaufschlagte Antrieb resultiert in einer Vorwärts-Kurvenfahrt.

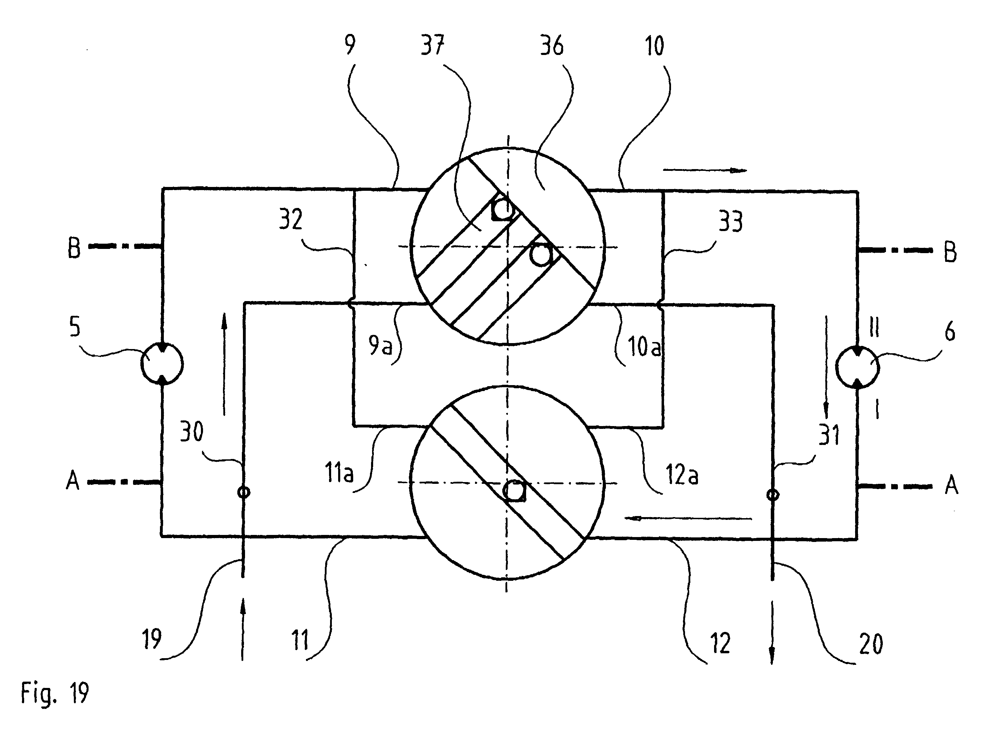

Fig. 19 zeigt eine Rückwärtskurvenfahrt, wobei der Zulauf der Hydraulikflüssigkeit durch eine Umstellung seitens des Fahrers über den Anschluß 19 erfolgt. Der Hydromotor 5 ist wegen des fehlenden Anschlusses in dieser Betriebsstellung bei Bohrung 9 am Drehschieber blockiert. Der Hydraulikstrom erreicht über die Vertikalbohrung 30 die Bohrung 9a in der Querschnittsebene B und wird über den Kanal 37 und die Aussparung 36 in dem Drehschieber zu der Bohrung 10 geführt. Von der erfolgt die Rückführung über den Hydromotor 6 zur Bohrung 20.

Alle weiteren möglichen Kurvenfahrten bei Vorwärts- oder Rückwärtsfahrten ergeben sich aus der vorstehend beschriebenen Funktionsweise bei den verschiedenen Betriebsstellungen des Drehschiebers 3.

Auch bei dieser Ausführungsform ist eine stufenlose Regulierung eines Hydromotors zwischen Null und einem Maximum möglich, indem der Drehschieber 3 in eine Position verdreht wird, in der sowohl die Aussparung 36 in der Querschnittsebene B wie auch die Durchgangsbohrung 34 in der Querschnittsebene A sich in einer aktiven Stellung befinden und abhängig von dem Drehwinkel des Schiebers jeweils einen Teilstrom der Hydraulikflüssigkeit weiterleiten womit sich ein Bypass zumindest für einen Teilstrom ausbildet.

Nur der Vollständigkeit wegen sei darauf hingewiesen, daß zur Lagerung des Drehschiebers im Gehäuse Kugeln 23 dienen, die in einer Ringnut 24 eingelegt sind, die durch halbkreisförmige Ringnuten auf gleicher Höhe in dem Drehschieber und dem Gehäuse gebildet sind (Fig. 3 und 7). Die Abdichtung des Drehschiebers 3 in dem Gehäuse 2 erfolgt mittels der O-Ringe 21, 22.

## Patentansprüche

1. Fahrzeug mit wenigstens einer lenkbaren Antriebsachse mit hydraulischem Einzelradantrieb, einem geschlossenen Hydraulikkreislauf mit einer Verstellpumpe (7) zur Förderung der Hydraulikflüssigkeit in beiden die Fahrtrichtung bestimmenden Richtungen, zwei seriell geschalteten, den Antrieb bildenden Hydromotoren (5, 6) und einer mit einem Lenkholm (8) des Fahrzeugs betätigbaren Ventilanordnung zur Beaufschlagung der beiden Hydromotoren (5, 6), **dadurch gekennzeichnet, daß**
- die Ventilanordnung eine Drehschieberanordnung (1) mit einem Gehäuse (2) und einem darin gelagerten Drehschieber (3) ist,
- das Gehäuse in zwei verschiedenen Querschnittsebenen (A, B) jeweils beiderseits des Drehschiebers angeordnete Bohrungen aufweist, die für beide Ebenen mit den Hydromotoren (5, 6) und auf zumindest einer Ebene mit der Verstellpumpe (7) verbunden sind, wobei in der Mittelstellung des Drehschiebers (3) für die Geradeausfahrt die beiden Hydromotoren durch einen in einer Ebene vorgesehenen Durchgang (18) direkt verbunden sind,
- im Drehschieber (3) Kanäle (15) mit Rückschlagventilen (16) angeordnet sind, die beim Verdrehen des Drehschiebers (3) aus der Mittelstellung für die Kurvenfahrt die Bohrungen in beiden Querschnittsebenen (A, B) verbinden und dabei einen Bypass zur Reduzierung der Durchflußmenge an dem Hydromotor des Kurveninnenrades bilden, wobei die Durchflußmenge in Abhängigkeit vom Drehwinkel gesteuert wird, während die Durchflußmenge an dem Hydromotor des Kurvenaußenrades konstant bleibt.

2. Fahrzeug nach Anspruch 1, **dadurch gekennzeichnet, daß** die Kanäle (15) parallel zu der Achse des Drehschiebers (3) angeordnet sind und in ihrer aktiven Stellung einen Bypass zwischen den auf unterschiedlichen Querschnittsebenen an einer Seite des Drehschiebers (2) angeordneten Bohrungen in dem Gehäuse bilden, wobei diese Bohrungen jeweils überkreuz an die Hydromotoren angeschlossen sind.

3. Fahrzeug nach Anspruch 1 oder 2, **dadurch gekennzeichnet, daß** der Drehschieber vier achsparallele Bypass-Kanäle (15) mit Rückschlagventilen (16) und in jeder der beiden Querschnittsebenen (A, B) vier vom Umfang ausgehende Bohrungen (17, 27) aufweist, die mit je einem Bypass-Kanal verbunden sind und von denen bei Kurvenfahrt jeweils zwei überkreuz angeordnete Bohrungen (9, 19), (10, 20) die Verbindung zwischen einem Bypass-Kanal (15) und je einer Gehäuse-Bohrung in den beiden Querschnittsebenen herstellen.

4. Fahrzeug nach Anspruch 3, **dadurch gekennzeichnet, daß** je zwei der in einer Querschnittsebene (A, B) angeordneten, mit je einem Bypass-Kanal (15) verbundenen Bohrungen (17, 27) im Drehschieber (3) fluchten und parallel zu den beiden anderen verlaufen.

5. Fahrzeug nach einem der Ansprüche 1 bis 4, **dadurch gekennzeichnet, daß** die Rückschlagventile (16) in den beiden in einer Drehlage des Drehschiebers (3) gleichzeitig mit den Gehäuse-Bohrungen (9, 10, 19, 20) in Verbindung stehenden Bypass-Kanälen (15) jeweils gleiche Wirkrichtung aufweisen.

6. Fahrzeug nach einem der Ansprüche 1 bis 5, **dadurch gekennzeichnet, daß** der Drehschieber (3) für die Geradeausfahrt als Durchgang eine zentrale Durchgangsbohrung (18) aufweist, die in der Mittelstellung des Drehschiebers (3) die beiden in einer Querschnittsebene (B) liegenden Gehäuse-Bohrungen (9, 10) direkt verbindet und zu deren beiden Seiten jeweils zwei der vier Bypass-Kanäle (15) angeordnet sind.

7. Fahrzeug nach Anspruch 1, **dadurch gekennzeichnet, daß**
- in jeder Querschnittsebene (A, B) des Drehschiebers (3) zumindest ein Kanal quer zur Achse des Drehschiebers angeordnet ist,
- in jeder Querschnittsebene (A, B) beiderseits des Drehschiebers (3) jeweils zwei Bohrungen (11, 11a, 12, 12a bzw. 9, 9a, 10, 10a) angeordnet sind, die zum Umfang des Drehschiebers reichen und die mit den jeweils auf der anderen Drehschieberseite angeordneten Bohrungen in der gleichen Querschnittsebene weitgehend fluchten und von denen jeweils eine Bohrung mit einem Hydromotor verbunden ist,
- die Bohrungen in beiden Querschnittsebenen (A, B) durch vertikale Bohrungen (30, 31 ,32, 33) im Gehäuse (2) weitgehend parallel zur Drehschieberachse verbunden sind,
- zwei Vertikalbohrungen (30, 31) Verstellpumpe (7) weitergeführt sind,
- durch den zumindest einen Kanal in jeder Querschnittsebene (A, B) des Drehschiebers (3) die jeweils überkreuz angeordneten Bohrungen in einer Querschnittsebene (A, B) zu beiden Seiten des Drehschiebers (3) in dessen aktiver Position verbunden sind.

8. Fahrzeug nach Anspruch 1 oder 6, **dadurch gekennzeichnet, daß** der Durchgang (36) in dem Drehschieber (3) zur direkten Verbindung der Hydromotoren (5, 6) über zwei fluchtende Bohrungen (9, 10) in einer Querschnittsebene (B) des Gehäuses als kreissegmentförmige Aussparung am Drehschieber ausgebildet ist.

9. Fahrzeug nach Anspruch 8, **dadurch gekennzeichnet, daß** die kreissegmentförmige Aussparung bei Rückwärtsfahrt mit zwei in etwa parallelen Querkanälen in dem Drehschieber mit entgegengesetzt wirkenden Rückschlagventilen zusammenwirkt.

10. Fahrzeug nach einem der Ansprüche 1 bis 9, **dadurch gekennzeichnet, daß** die Durchflußmenge für jeweils einen der beiden Hydromotoren (5, 6) stufenlos zwischen Null und einem Maximum steuerbar ist.

11. Fahrzeug nach Anspruch 1, **dadurch gekennzeichnet, daß** der Lenkholm (8) mechanisch mit dem Drehschieber (3) wirkverbunden ist.

12. Fahrzeug nach Anspruch 1, **dadurch gekennzeichnet, daß** die Drehschieberanordnung integrierte Senkbremsen aufweist.

## Claims

1. Vehicle with at least one steerable drive axle with hydraulic single wheel drive, a closed hydraulic circuit with a variable delivery pump (7) for delivering hydraulic fluid in both directions determining the direction of travel, two serially connected, drive-forming hydraulic motors (5, 6) and a valve arrangement, operable with a vehicle steering bar (8), for activating the two hydraulic motors (5, 6), **characterized in that**
- the valve arrangement is a rotary slide valve arrangement (1) with a casing (2) and a rotary slide valve (3) mounted therein,
- the casing has in two different cross-sectional planes (A, B) holes in each case arranged on either side of the rotary slide valve and which for both planes are connected to the hydraulic motors (5, 6) and on at least one plane to the variable delivery pump (7) and in the neutral position of the rotary slide valve (3) for straight ahead travel, the two hydraulic motors are directly linked by a passage (18) provided in one plane,
- in the rotary slide valve (3) are provided channels (15) with check valves (16) which, on rotating the rotary slide valve (30 from the neutral position for cornering, link the holes in both cross-section planes (A, B) and form a bypass for reducing the flow quantity to the hydraulic motor for the curve inner wheel, the flow quantity being controlled as a function of the rotation angle, whereas the flow quantity at the hydraulic motor of the curve outer wheel remains constant.

2. Vehicle according to claim 1, **characterized in that** the channels (15) are positioned parallel to the axis of the rotary slide valve (3) and in their active position form a bypass between holes in the casing located on different cross-sectional planes on one side of the rotary slide valve (3), said holes being in each case connected crosswise to the hydraulic motors.

3. Vehicle according to claim 1 or 2, **characterized in that** the rotary slide valve has four axially parallel bypass channels (15) with check valve (16) and in each of the two cross-sectional planes (A, B) four holes (17, 27) emanating from the circumference and in each case connected to one bypass channel and whereof during cornering in each case two crosswise arranged holes (9, 19, 10, 20) form the connection between a bypass channel (15) and in each case one casing hole in the two cross-sectional planes.

4. Vehicle according to claim 3, **characterized in that** in each case two holes (17, 27) in the rotary slide valve (3) located in a cross-sectional plane (A, B) and in each case connected to a bypass channel (15) are aligned and are parallel to the two others.

5. Vehicle according to one of the claims 1 to 4, **characterized in that** the check valve (16) in the two bypass channels (15) simultaneously connected to the casing holes (9, 10, 19, 20) in a rotation position of the rotary slide valve (3) in each case have the same action direction.

6. Vehicle according to one of the claims 1 to 5, **characterized in that** the rotary slide valve (3) for straight ahead travel has as a passage a central through-hole (18), which in the central position of the rotary slide valve (3) directly links the two casing holes (9, 10) located in a cross-sectional plane (B) and on both sides of which are in each case provided two of the four bypass channels (15).

7. Vehicle according to claim 1, **characterized in that**
- in each cross-sectional plane (A, B) of the rotary slide valve (3) is provided at least one channel at right angles to the axis of the rotary slide valve,
- in each cross-sectional plane (A, B) on either side of the rotary slide valve (3) are in each case provided two holes (11, 11a, 12, 12a or 9, 9a, 10, 10a), which extend to the circumference of the rotary slide valve and which are substantially aligned with the holes in the same cross-sectional plane and located on the other rotary slide valve side and whereof in each case one hole is connected to a hydraulic motor,
- the holes in both cross-sectional planes (A, B) are connected substantially parallel to the rotary slide valve axis by vertical holes (30, 31, 32, 33) in the casing (2),
- two vertical holes (30, 31) are continued on to the variable delivery pump (7),
- through the at least one channel in each cross-sectional plane (A, B) of the rotary slide valve (3) the in each case crosswise arranged holes in one cross-sectional plane (A, B) are connected to both sides of the rotary slide valve (3) in the active position thereof.

8. Vehicle according to claim 1 or 6, **characterized in that** the passage (36) in the rotary slide valve (3) for the direct connection of the hydraulic motors (5, 6) by means of two aligned holes (9, 10) in a cross-sectional plane (B) of the casing is constructed as a circular segmental recess on the rotary slide valve.

9. Vehicle according to claim 8, **characterized in that** the circular segmental recess during reverse travel with two roughly parallel transverse channels in the rotary slide valve cooperates with oppositely acting check valves.

10. Vehicle according to one of the claims 1 to 9, **characterized in that** the flow quantity for in each case one of the two hydraulic motors (5, 6) can be continuously controlled between zero and a maximum.

11. Vehicle according to claim 1, **characterized in that** the steering bar (8) is mechanically operatively connected to the rotary slide valve (3).

12. Vehicle according to claim 1, **characterized in that** the rotary slide valve arrangement has integrated sink brakes.

## Revendications

1. Véhicule comprenant au moins un arbre moteur directionnel à propulsion hydraulique pour chaque roue indépendante, un circuit hydraulique fermé comportant une pompe de réglage (7) pour amener le liquide hydraulique dans les deux directions déterminant le sens de la marche, deux moteurs hydrauliques montés en série formant l'entraînement, et un dispositif de vanne actionnable par un levier de direction (8) du véhicule pour alimenter les deux moteurs hydrauliques (5,6), **caractérisé en ce que** :
. le dispositif de vanne consiste en un dispositif à tiroir pivotant (1) comprenant un carter (2) dans lequel est logé un tiroir pivotant (3),
. le carter présente dans deux plans différents de coupe transversale (A,B) des perçages disposés à chaque fois de part et d'autre du tiroir pivotant, reliés dans les deux plans de coupe aux moteurs hydrauliques (5,6) et dans au moins un plan de coupe à la pompe de réglage (7), les deux moteurs hydrauliques étant reliés directement entre eux, dans la position médiane du tiroir pivotant (3) pour le déplacement en ligne droite, par un passage (18) prévu dans un plan,
. des canaux (15) comprenant des clapets antiretour (16) sont disposés dans le tiroir pivotant (3), qui font communiquer les perçages dans les deux plans de coupe transversale (A,B) lorsque le tiroir pivotant (3) se déplace de la position médiane dans celle du déplacement en courbe et forment ainsi une dérivation pour réduire le débit au niveau du moteur hydraulique de la roue intérieure à la courbe, le débit étant commandé en fonction de l'écart angulaire alors que le débit au niveau du moteur hydraulique de la roue extérieure à la courbe reste constant.

2. Véhicule selon la revendication 1,
**caractérisé en ce que** les canaux (15) sont disposés parallèles à l'axe du tiroir pivotant (3) et constituent une dérivation dans leur position active entre les perçages ménagés dans des plans de coupe transversale variables d'un côté du tiroir pivotant (3) dans le carter, ces perçages étant chacun reliés aux moteurs hydrauliques de façon croisée.

3. Véhicule selon la revendication 1 ou 2, **caractérisé en ce que** le tiroir pivotant présente quatre canaux de dérivation (15) parallèles à son axe comportant des clapets antiretour (16) et, dans chacun des deux plans de coupe transversale (A,B) des perçages (17,27) commençant à la périphérie, reliés chacun à un canal de dérivation et desquels, lors d'un déplacement en courbe, deux perçages (9,19), (10,20) à chaque fois disposés croisés forment la liaison entre le canal de dérivation (15) et un perçage de carter dans les deux plans de coupe transversale.

4. Véhicule selon la revendication 3,
**caractérisé en ce que** à chaque fois deux des perçages (17,27) disposés dans un plan de coupe transversale (A,B) et reliés chacun à un canal de dérivation (15), sont alignés dans le tiroir pivotant (3) et s'étendent parallèles aux deux autres.

5. Véhicule selon l'une quelconque des revendications 1 à 4, **caractérisé en ce que** les clapets antiretour (16) dans les deux canaux de dérivation (15) en communication dans une position de rotation du tiroir pivotant (3) simultanément avec les perçages du carter (9,10,19,20), présentent chacun la même direction passante.

6. Véhicule selon l'une quelconque des revendications 1 à 5, **caractérisé en ce que** le tiroir pivotant (3) présente comme passage pour le déplacement en ligne droite un perçage central de passage (18), qui relie dans la position médiane du tiroir pivotant (3) les deux perçages de carter (9,10) situés dans un plan de coupe transversale (B) et de part et d'autre desquels sont à chaque fois disposés deux des quatre canaux de dérivation (15).

7. Véhicule selon la revendication 1,
**caractérisé en ce que**
. dans chaque plan de coupe transversale (A,B) du tiroir pivotant (3) est disposé au moins un canal transversalement à l'axe du tiroir pivotant,
. dans chaque plan de coupe transversale (A,B) de part et d'autre du tiroir pivotant (3) sont prévus à chaque fois deux perçages (11,11a,12,12a respectivement 9,9a,10,10a) s'étendant jusqu'à la périphérie du tiroir pivotant et qui sont sensiblement alignés avec les perçages disposés à chaque fois sur l'autre face du tiroir pivotant dans le même plan de coupe transversale et desquels un perçage est relié à chaque fois à un moteur hydraulique,
. les perçages dans les deux plans de coupe transversale (A,B) sont reliés par des perçages verticaux (30,31,32,33) ménagés dans le carter (2) sensiblement parallèles à l'axe du tiroir pivotant,
. deux perçages verticaux (30,31) sont prolongés jusqu'à la pompe de réglage (7),
. les perçages disposés croisés à chaque fois dans un plan de coupe transversale (A,B) de part et d'autre du tiroir pivotant (3) sont reliés dans la position active de ce dernier par l'au moins un canal dans chaque plan de coupe transversale (A,B) du tiroir pivotant (3).

8. Véhicule selon la revendication 1 ou 6, **caractérisé en ce que** le passage (36) dans le tiroir pivotant (3) pour relier directement les moteurs hydrauliques (5,6) par l'intermédiaire de deux perçages alignés (9,10) dans un plan de coupe transversale (B) du carter est conformé en évidement en segment de cercle sur le tiroir pivotant.

9. Véhicule selon la revendication 8,
**caractérisé en ce que** l'évidement en segment de cercle coopère en marche arrière avec deux canaux transversaux sensiblement parallèles du tiroir pivotant à clapets antiretour à effet opposé.

10. Véhicule selon l'une quelconque des revendications 1 à 9, **caractérisé en ce que** le débit de chacun des deux moteurs hydrauliques (5,6) peut être réglé en continu entre zéro et un maximum.

11. Véhicule selon la revendication 1,
**caractérisé en ce que** le levier de direction (8) est relié mécaniquement en fonctionnement au tiroir pivotant (3).

12. Véhicule selon la revendication 1,
**caractérisé en ce que** le dispositif de tiroir pivotant présente des freins de descente intégrés.
